# EUROPEAN PATENT SPECIFICATION

(11) **EP 3 755 041 B1**
(45) Date of publication and mention of the grant of the patent: **20.03.2024**
(21) Application number: 19754249.1
(22) Date of filing: 22.01.2019
(51) Int. Cl.: H04W 24/10, H04W 72/04, H04L 5/00

(54) **METHOD FOR DETERMINING CSI RESOURCE TYPE, TERMINAL, AND NETWORK-SIDE APPARATUS**
VERFAHREN ZUR BESTIMMUNG DES CSI-RESSOURCENTYPS, ENDGERÄT UND NETZSEITIGE VORRICHTUNG
PROCÉDÉ DE DÉTERMINATION D'UN TYPE DE RESSOURCE DE CSI, TERMINAL, ET APPAREIL CÔTÉ RÉSEAU

(30) Priority: 13.02.2018 CN 201810150949
(43) Date of publication of application: 23.12.2020
(73) Proprietor: Vivo Mobile Communication Co., Ltd., Dongguan, Guangdong 523860 (CN)
(72) Inventor: YANG, Xiaodong, Dongguan, Guangdong 523860 (CN); MA, Yue, Dongguan, Guangdong 523860 (CN)
(74) Representative: Lavoix
(86) International application number: PCT/CN2019/072652
(87) International publication number: WO 2019/157915

(56) References cited:
- CN-A- 102 082 636
- CN-A- 102 624 494
- VIVO: "MAC CEs format for beam management", 3GPP DRAFT; R2-1800900, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Vancouver, Canada; 20180122 - 20180126 12 January 2018 (2018-01-12), XP051386424, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-12]
- VIVO: "Some clarifications for MAC CEs for beam management", 3GPP DRAFT; R2-1800899_SOME CLARIFICATIONS FOR MAC CES FOR BEAM MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Vancouver, Canada; 20180122 - 20180126 12 January 2018 (2018-01-12), XP051386423, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-12]
- HUAWEI ET AL: "Introducing new MAC CEs for NR MIMO", 3GPP DRAFT; R2-1801523 INTRODUCING NEW MAC CES FOR NR MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Vancouver, Canada; 20180122 - 20180126 18 January 2018 (2018-01-18), XP051386983, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-18]
- HUAWEI ET AL: "Need for new MAC CEs for UL and DL beam management", 3GPP DRAFT; R2-1712561, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20171127 - 20171201 17 November 2017 (2017-11-17), XP051371523, Retrieved from the Internet: URL:http://www.3gpp.org/ftp/tsg%5Fran/WG2% 5FRL2/TSGR2%5F100/Docs/ [retrieved on 2017-11-17]
- SAMSUNG: "CR on New MAC CEs for NR MIMO", 3GPP DRAFT; 38.321_DRAFTCR_(REL-15)_R2-1800782 CR ON NEW MAC CES FOR NR MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Vancouver, Canada; 20180122 - 20180126 12 January 2018 (2018-01-12), XP051385911, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-12]
- "3rd Generation Partnership Project; Technical Specification Group Radio Access Network; NR; Physical layer procedures for data (Release 15", 3GPP TS 38. 214, no. V1.3.0, 15 December 2017 (2017-12-15), XP051392005,

## Description

### TECHNICAL FIELD

The present disclosure relates to the field of wireless communications technology, in particular to a method for determining a channel state information (Channel State Information, CSI) resource type and a terminal.

### BACKGROUND

Channel state information-reference signal (Channel State Information-Reference Signal, CSI-RS) is used by a terminal to measure a downlink beam. One or more non-zero-power CSI-RS resource sets may be configured by a high layer for a user, and the actual quantity of the CSI-RS resource sets is configured at a network side.

Channel state information-interference measurement (Channel State Information-Interference measurement, CST-IM) is used by the terminal to measure interference. One or more CSI-IM resource sets may be configured by the high layer for the user. Transmission power for each CSI-IM configuration is assumed to be zero for the interference measurement.

Semi-persistent (Semi-Persistent, SP) CSI resource is activated/deactivated through a media access control control element (Media Access Control Control Element, MAC CE).

In the related art, a CSI measurement configuration structure has been presented. There are two types of semi-persistent measurement resources, i.e., a semi-persistent measurement resource for a physical uplink control channel (Physical Uplink Control Channel, PUCCH), and a semi-persistent measurement resource for a physical uplink shared channel (Physical Uplink Shared Channel, PUSCH). The CSI-RS resource sets and the CSI-IM resource sets may be configured for each type of the semi-persistent measurement resources. Each CSI-RS resource set includes one or more CSI-RS resources, and each CSI-IM resource set includes one or more CSI-IM resources.

When the above-mentioned CSI measurement configuration structure is adopted, it is impossible for the terminal to differentiate whether the CSI-RS resource set (or the CSI-IM resource set) indicated in the MAC CE is a CSI-RS resource set (or the CSI-IM resource set) configured for the semi-persistent PUCCH measurement resource or a CSI-RS resource set (or the CSI-IM resource set) configured for the semi-persistent PUSCH measurement resource. For example, when serial numbers of the CSI-RS resource sets configured for the semi-persistent PUCCH are 1, 2 and 3, serial numbers of the CSI-RS resource sets configured for the semi-persistent PUSCH are 1, 2, 3 and 4, and a serial number of a CSI-RS resource set carried in the MAC CE for activation is 2, it is impossible for the terminal to determine whether the CSI-RS resource configured for the semi-persistent PUCCH and having the serial number of 2, or the CSI-RS resource configured for the semi-persistent PUSCH and having the serial number of 2, is to be activated.

Non-patent literature named "MAC CEs format for beam management", 3GPP DRAFT R2-1800900, discusses the semi-persistent CSI-RS Activation/Deactivation MAC CE identified in a MAC PDU sub-header.

Non-patent literature named "Some clarifications for MAC CEs for beam management", 3GPP DRAFT R2-1800899, discusses MAC CE without indication of QCL/TCI state.

Non-patent literature named "Introducing new MAC CEs for NR MIMO", 3GPP DRAFT R2-1801523, discusses the MAC CE for semi-persistent CSI-RS/CSI-IM activation/deactivation.

Non-patent literature named "Need for new MAC CEs for UL and DL beam management", 3GPP DRAFT R2-1712561, discusses the required DL MAC CE both for DL beam management and UL beam management.

Non-patent literature named "CR on New MAC CEs for NR MIMO", 3GPP DRAFT R2-1800782, discusses various MAC control element appeared in a MAC PDU sub-header.

### SUMMARY

The scope of the present invention is determined only by the scope of the appended claims. More precisely, in one aspect, the present disclosure provides a method for determining reference signal types of sounding reference signal resources performed by a terminal according to claim 1.

Furthermore, in yet another aspect, the present disclosure provides a terminal according to claim 2.

### BRIEF DESCRIPTION OF THE DRAWINGS

FIG. 1 is a flow chart of a method for determining a CSI resource type according to one embodiment of the present disclosure;
FIG. 2 is another flow chart of the method for determining the CSI resource type according to one embodiment of the present disclosure;
FIG. 3 is yet another flow chart of the method for determining the CSI resource type according to one embodiment of the present disclosure;
FIG. 4 is a schematic view showing contents in an MAC CE for activating/deactivating CSI resources according to one embodiment of the present disclosure;
FIG. 5 is a schematic view showing a header of the MAC CE for activating/deactivating the CSI resources according to one embodiment of the present disclosure;
FIG. 6 is still yet another flow chart of the method for determining the CSI resource type according to one embodiment of the present disclosure;
FIG. 7 is a flow chart of a method for activating/deactivating CSI resources according to one embodiment of the present disclosure;
FIG. 8 is a schematic view showing a terminal according to one embodiment of the present disclosure;
FIG. 9 is a schematic view showing a network side device according to one embodiment of the present disclosure;
FIG. 10 is a flow chart of a method for determining reference signal types of SRS resources according to one embodiment of the present disclosure;
FIGS. 11 to 14 are schematic view showings contents in an MAC CE for activating/deactivating the SRS resources according to one embodiment of the present disclosure;
FIG. 15 is a flow chart of a method for activating/deactivating SRS resources according to one embodiment of the present disclosure;
FIG. 16 is another schematic view showing the terminal according to one embodiment of the present disclosure;
FIG. 17 is another schematic view showing the network side device according to one embodiment of the present disclosure; and
FIG. 18 is yet another schematic view showing the terminal according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

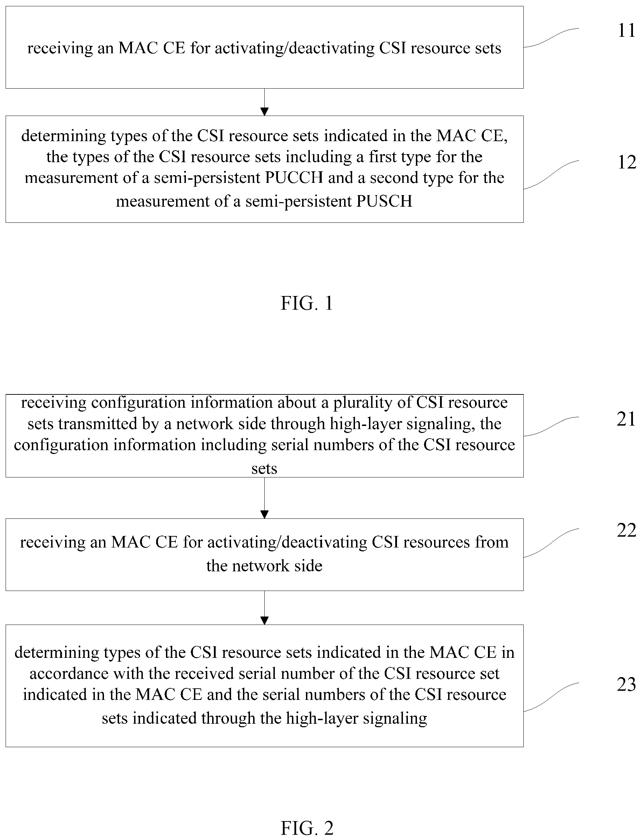

As shown in FIG. 1, the present disclosure provides in some embodiments a method for determining a CSI resource type for a terminal, including: Step 11 of receiving an MAC CE for activating/deactivating CSI resource sets; and Step 12 of determining types of the CSI resource sets indicated in the MAC CE. The types of the CSI resource sets include a first type for the measurement of a semi-persistent PUCCH and a second type for the measurement of a semi-persistent PUSCH.

In the embodiments of the present disclosure, an activated/deactivated state of at least one CSI resource set may be indicated in the MAC CE for activating/deactivating (activating or deactivating) the CSI resource sets, and each CSI resource set may include one or more CSI resources.

In the embodiments of the present disclosure, the first type of CSI resource sets may be used for the measurement of the semi-persistent PUCCH, and the second type of the CSI resource sets may be used for the measurement of the semi-persistent PUSCH.

In the embodiments of the present disclosure, the CSI resources may be CSI-RS resources or CSI-IM resources.

Merely an activated/deactivated state of a CSI-RS resource set or a CSI-IM resource set, or both of the activated/deactivated state of the CSI-RS resource set or the CSI-IM resource set, may be indicated in the MAC CE.

According to the embodiments of the present disclosure, upon the receipt of the MAC CE for activating/deactivating the CSI resource sets, it is able to determine the types of the CSI resource sets indicated in the MAC CE, thereby to solve the problem that it is impossible to differentiate the CSI resource set to be activated when a same serial number is used by the CSI resource set for the measurement of the semi-persistent PUCCH and the CSI resource set for the measurement of the semi-persistent PUSCH.

In the embodiments of the present disclosure, subsequent to determining the types of the CSI resource sets indicated in the MAC CE, the method may further include activating/deactivating a corresponding CSI resource set in accordance with the determined types of the CSI resource sets indicated in the MAC CE.

In the embodiments of the present disclosure, the types of the CSI resource sets indicated in the MAC CE may be determined in various ways, which will be illustratively described hereinafter.

As shown in FIG. 2, the present disclosure provides in some embodiments a method for determining a CSI resource type for a terminal, which includes the following steps.

Step 21: receiving configuration information about a plurality of CSI resource sets transmitted by a network side through high-layer signaling. The configuration information may include serial numbers of the CSI resource sets. The plurality of CSI resource sets may include a first type of CSI resource sets and a second type of CSI resource sets. In the serial numbers of the CSI resource sets, the CSI resource sets including different CSI resources may have different serial numbers.

Step 22: receiving an MAC CE for activating/deactivating CSI resources from the network side. A serial number of a CSI resource set to be activated/deactivated may be carried in the MAC CE.

Step 23: determining types of the CSI resource sets indicated in the MAC CE in accordance with the received serial number of the CSI resource set indicated in the MAC CE and the serial numbers of the CSI resource sets indicated through the high-layer signaling. The CSI resource set indicated in the MAC CE may use a same numbering method as the CSI resource sets indicated through the high-layer signaling.

In the embodiments of the present disclosure, CSI resource sets for the measurement of a semi-persistent PUCCH and CSI resource sets for the measurement of a semi-persistent PUSCH configured through the high-layer signaling may be numbered uniformly. For example, the quantity of CSI resource sets for the PUCCH may be 16 at most, and the quantity of CSI resource sets for the PUSCH may be 16 at most, so the CSI resource sets may be numbered from 0 to 31.

In some embodiments of the present disclosure, the serial numbers of the CSI resource sets for the PUCCH and the serial numbers of the CSI resource sets for the PUSCH configured through the high-layer signaling may be different from each other.

In some other embodiments of the present disclosure, in the CSI resource sets for the PUCCH and the CSI resource sets for the PUSCH configured through the high-layer signaling, the CSI resource sets including different CSI resources may have different serial numbers, and the CSI resource sets including same CSI resources may have a same serial number. For example, the serial numbers of the CSI resource sets for the PUCCH may be 1, 2 and 3, and the serial numbers of the CSI resource sets for the PUSCH may be 3, 25 and 28. The CSI resource sets for the PUCCH and the CSI resource sets for the PUSCH both includes the CSI resource set having a serial number of 3, and it means that the CSI resource sets having the serial number of 3 include the same CSI resources.

In addition, in the embodiments of the present disclosure, the CSI resource sets indicated in the MAC CE may use a same numbering method as the CSI resource sets indicated through the high-layer signaling. In other words, in the CSI resource sets indicated in the MAC CE and the CSI resource sets indicated through the high-layer signaling, the CSI resource sets including the same CSI resources may have a same serial number.

Hence, in the embodiments of the present disclosure, when the serial number of the CSI resource set to be activated/deactivated is carried in the MAC CE, the terminal may determine the CSI resource set to be activated/deactivated in accordance with the serial number.

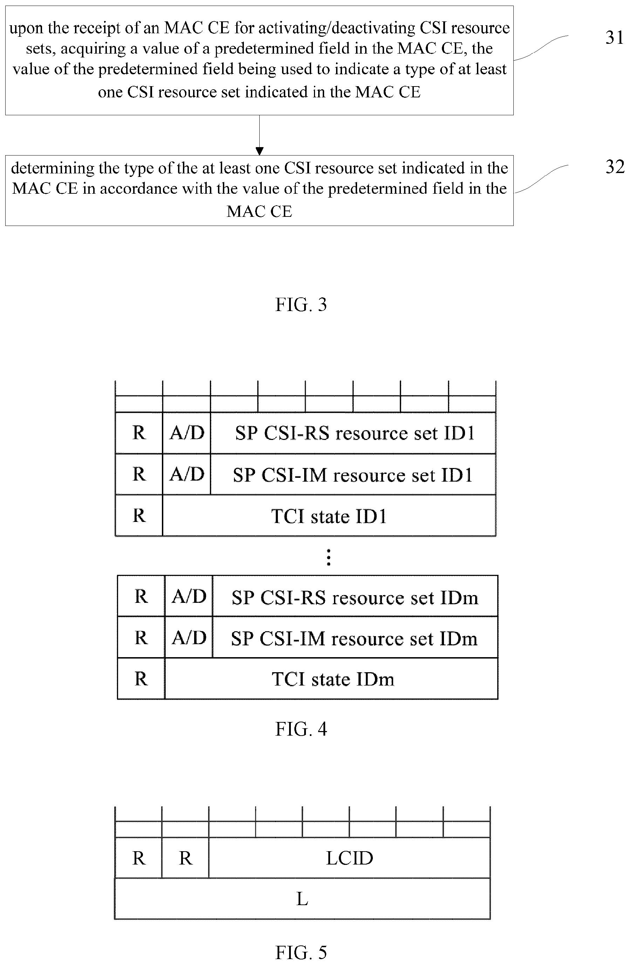

As shown in FIG. 3, the present disclosure further provides in some embodiments a method for determining a CSI resource type for a terminal, which includes: Step 31 of, upon the receipt of an MAC CE for activating/deactivating CSI resource sets, acquiring a value of a predetermined field in the MAC CE, the value of the predetermined field being used to indicate a type of at least one CSI resource set indicated in the MAC CE; and Step 32 of determining the type of the at least one CSI resource set indicated in the MAC CE in accordance with the value of the predetermined field in the MAC CE.

In a possible embodiment of the present disclosure, the predetermined field may be a field R in contents in the MAC CE, an activated/deactivated state of at least one CSI resource set may be indicated in the contents in the MAC CE, and each CSI resource set may correspond to one predetermined field.

As shown in FIG. 4, which shows the contents in the MAC CE for activating/deactivating the CSI resources, the MAC CE may be used to indicate activated/deactivated states of number m of CSI-RS resource sets and number m of CSI-IM resource sets. In FIG. 4, SP CSI-RS Resource Set ID is used to indicate a serial number of each CSI-RS resource set, and SP CSI-IM Resource Set ID is used to indicate a serial number of each CSI-IM resource set. Each CSI-RS resource set may correspond to one field R, and each CSI-IM resource set may correspond to one field R. The field R is used to indicate a type of a corresponding CSI resource set (a CSI-RS resource set or a CSI-IM resource set), i.e., where the CSI resource is a CSI resource set for a PUCCH or a CSI resource set for a PUSCH. A value of the field R may have one bit. When the value of the field R is 0, it means that the corresponding CSI resource set is a CSI resource set for the PUCCH, and when the value of the field R is 1, it means that the corresponding CSI resource set is a CSI resource set for the PUSCH; or when the value of the field R is 1, it means that the corresponding CSI resource set is a CSI resource set for the PUCCH, and when the value of the field R is 0, it means that the corresponding CSI resource set is a CSI resource set for the PUSCH.

In FIG. 4, a field A/D may be used to indicate an activated/deactivated state of an immediately-subsequent SP CSI-RS Resource Set ID or SP CSI-IM Resource Set ID. A value of the field A/D may also have one bit. When the value of the field A/D is 1, it means that the CSI resource is to be activated, and when the value of the field A/D is 0, it means that the CSI resource is to be deactivated; or when the value of the field A/D is 0, it means that the CSI resource is to be activated, and when the value of the field A/D is 1, it means that the CSI resource is to be deactivated. In some other embodiments of the present disclosure, the MAC CE may not include the field A/D, and all the CSI resource sets carried in the MAC CE may be activated or deactivated.

In a possible embodiment of the present disclosure, the predetermined field may be a logical channel identity (Logical Channel Identity, LCID) field in a header of the MAC CE, and a value of the LCID field in the header of the MAC CE may be used to indicate types of all the CSI resource sets indicated in the MAC CE.

As shown in FIG. 5, which shows the header of the MAC CE for activating/deactivating the CSI resources, in the embodiments of the present disclosure, the LCID field in the header of the MAC CE may be used to indicate the types of all the CSI resources sets indicated in the MAC CE.

In another possible embodiment of the present disclosure, the predetermined field may also be a field R in the header of the MAC CE, and a value of the field R in the header of the MAC CE may be used to indicate the types of all the CSI resource sets indicated in the MAC CE. A value of the field R may have one bit. When the value of the field R is 0, it means that all the CSI resource sets indicated in the MAC CE are for the PUCCH, and when the value of the field R is 1, it means that all the CSI resource sets indicated in the MAC CE are for the PUSCH; or when the value of the field R is 1, it means that all the CSI resource sets indicated in the MAC CE are for the PUCCH, and when the value of the field R is 0, it means that all the CSI resource sets indicated in the MAC CE are for the PUSCH.

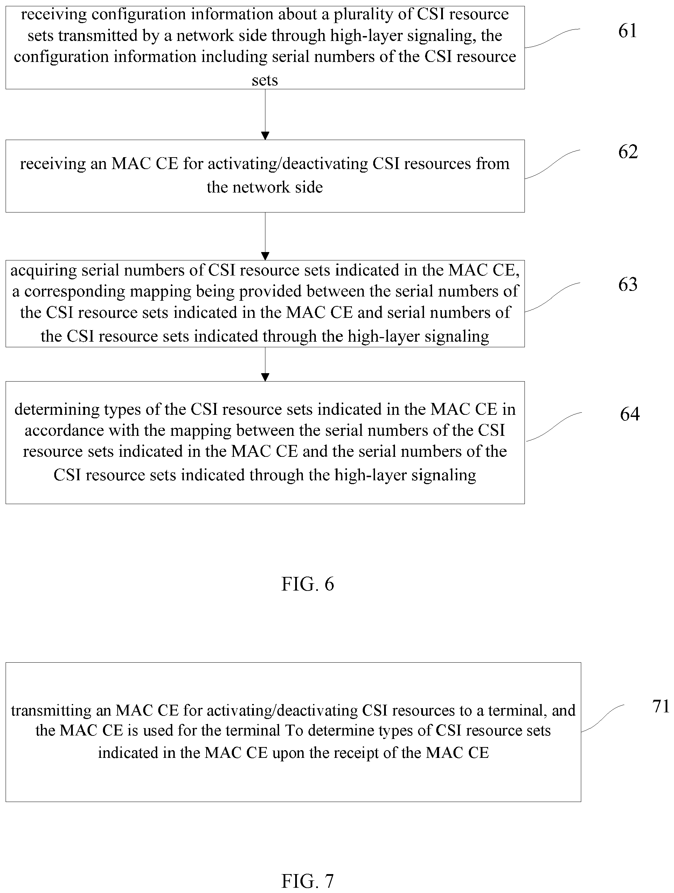

As shown in FIG. 6, the present disclosure further provides in some embodiments a method for determining a CSI resource type for a terminal, which includes the following steps.

Step 61: receiving configuration information about a plurality of CSI resource sets transmitted by a network side through high-layer signaling. The configuration information may include serial numbers of the CSI resource sets, and the plurality of CSI resource sets may include a first type of CSI resource sets and a second type of CSI resource sets.

Step 62: receiving an MAC CE for activating/deactivating CSI resources from the network side. The MAC CE may carry a serial number of a CSI resource set to be activated/deactivated.

Step 63: acquiring serial numbers of CSI resource sets indicated in the MAC CE. There is a corresponding mapping between the serial numbers of the CSI resource sets indicated in the MAC CE and serial numbers of the CSI resource sets indicated through the high-layer signaling.

Step 64: determining types of the CSI resource sets indicated in the MAC CE in accordance with the mapping between the serial numbers of the CSI resource sets indicated in the MAC CE and the serial numbers of the CSI resource sets indicated through the high-layer signaling.

In the embodiments of the present disclosure, the serial numbers of the CSI resource sets configured through the high-layer signaling may not be changed. Instead, the serial numbers of the CSI resource sets indicated in the MAC CE may be interpreted again, and the mapping between the serial numbers of the CSI resource sets configured through the high-layer signaling and the serial numbers of the CSI resource sets indicated in the MAC CE may be determined, so as to determine the types of the CSI resource sets indicated in the MAC CE in accordance with the mapping.

For example, when the quantity of CSI resource sets for a PUCCH is 16 at most and the quantity of CSI resource sets for a PUSCH is 16 at most, the CSI resource sets for the PUCCH and the CSI resource sets for the PUSCH may each numbered from 0 to 15. However, the CSI resource sets indicated in the MAC CE may be numbered from 0 to 31. In addition, the serial numbers 0 to 15 of the CSI resource sets indicated in the MAC CE may be mapped to the serial numbers 0 to 15 of the CSI resource sets for the PUCCH, and the serial numbers 16 to 31 of the CSI resource sets indicated in the MAC CE may be mapped to the serial numbers 0 to 15 of the CSI resource sets for the PUSCH. Of course, the serial numbers 0 to 15 of the CSI resource sets indicated in the MAC CE may also be mapped to the serial numbers 0 to 15 of the CSI resource sets for the PUSCH, and the serial numbers 16 to 31 of the CSI resource sets indicated in the MAC CE may also be mapped to the serial numbers 0 to 15 of the CSI resource sets for the PUCCH. Upon the receipt of the MAC CE, the terminal may determine the types of the CSI resource sets indicated in the MAC CE in accordance with the mapping.

The mapping may be predefined in a protocol or configured by the network side.

As shown in FIG. 7, the present disclosure further provides in some embodiments a method for activating/deactivating CSI resources for a network side device, which includes Step 71 of transmitting an MAC CE for activating/deactivating CSI resources to a terminal, and the MAC CE is used for the terminal to determine types of CSI resource sets indicated in the MAC CE upon the receipt of the MAC CE. The types of the CSI resource sets may include a first type for the measurement of a semi-persistent PUCCH and a second type for the measurement of a semi-persistent PUSCH.

In some embodiments of the present disclosure, prior to transmitting the MAC CE for activating/deactivating the CSI resources to the terminal, the method may further include transmitting configuration information about a plurality of CSI resource sets to the terminal through high-layer signaling. The configuration information may include serial numbers of the CSI resource sets. The plurality of CSI resource sets may include a first type of CSI resource sets and a second type of CSI resource sets. In the serial numbers of the CSI resource sets, the CSI resource sets including different CSI resources may have different serial numbers. The MAC CE may carry a serial number of a CSI resource set to be activated/deactivated, and the CSI resource sets indicated in the MAC CE may use a same numbering method as the CSI resource sets indicated through the high-layer signaling.

In some other embodiments of the present disclosure, the MAC CE may include a predetermined field, and a value of the predetermined field may be used to indicate a type of at least one CSI resource set indicated in the MAC CE.

In a possible embodiment of the present disclosure, the predetermined field may be a field R in contents in the MAC CE, an activated/deactivated state of at least one CSI resource set may be indicated in the contents in the MAC CE, and each CSI resource set may correspond to one predetermined field.

Alternatively, the predetermined field may be an LCID field or a field R in a header of the MAC CE, and a value of the LCID field or the field R in the header of the MAC CE may be used to indicate types of all the CSI resource sets indicated in the MAC CE.

In some other embodiments of the present disclosure, prior to transmitting the MAC CE for activating/deactivating the CSI resources to the terminal, the method may further include transmitting configuration information about a plurality of CSI resource sets to the terminal through high-layer signaling. The configuration information may include serial numbers of the CSI resource sets. The plurality of CSI resource sets may include a first type of CSI resource sets and a second type of CSI resource sets. The MAC CE may carry a serial number of a CSI resource set to be activated/deactivated, and there exists a corresponding mapping between the serial numbers of the CSI resource sets indicated in the MAC CE and the serial numbers of the CSI resource sets indicated through the high-layer signaling.

Each CSI resource may be a CSI-RS resource or a CSI-IM resource.

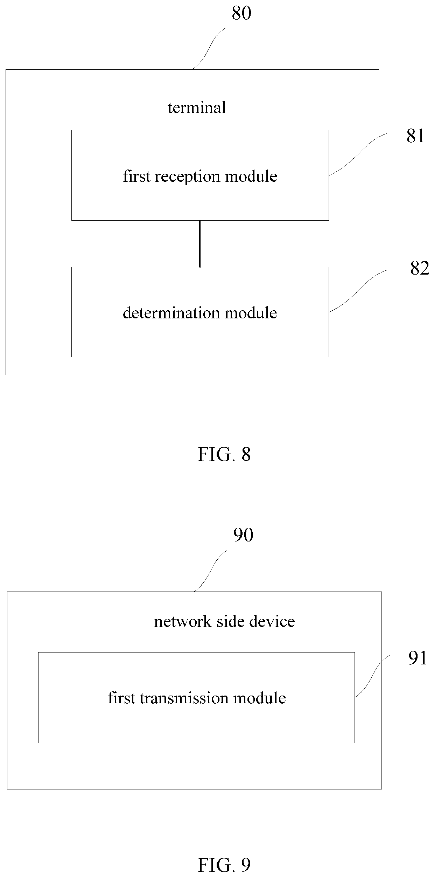

As shown in FIG. 8, the present disclosure further provides in some embodiments a terminal 80, which includes: a first reception module 81 configured to receive an MAC CE for activating/deactivating CSI resource sets; and a determination module 82 configured to determine types of the CSI resource sets indicated in the MAC CE, the types of the CSI resource sets including a first type for the measurement of a semi-persistent PUCCH and a second type for the measurement of a semi-persistent PUSCH.

In a possible embodiment of the present disclosure, the terminal may further include a second reception module configured to receive configuration information about a plurality of CSI resource sets transmitted by a network side through high-layer signaling. The configuration information may include serial numbers of the CSI resource sets. The plurality of CSI resource sets may include a first type of CSI resource sets and a second type of CSI resource sets. In the serial numbers of the CSI resource sets, the CSI resource sets including different CSI resources may have different serial numbers. The MAC CE may carry a serial number of a CSI resource set to be activated/deactivated. The determination module 82 is further configured to determine the types of the CSI resource sets indicated in the MAC CE in accordance with the serial numbers of the CSI resource sets indicated in the MAC CE and the serial numbers of the CSI resource sets indicated through the high-layer signaling. The CSI resource sets indicated in the MAC CE may use a same numbering method as the CSI resource sets indicated through the high-layer signaling.

In a possible embodiment of the present disclosure, the determination module may include: an acquisition sub-module configured to acquire a value of a predetermined field in the MAC CE, the value of the predetermined field being used to indicate a type of at least one CSI resource set indicated in the MAC CE; and an execution sub-module configured to determine the type of the at least one CSI resource set indicated in the MAC CE in accordance with the value of the predetermined field in the MAC CE.

In a possible embodiment of the present disclosure, the predetermined field may be a field R in contents in the MAC CE, an activated/deactivated state of at least one CSI resource set may be indicated in the contents in the MAC CE, and each CSI resource set may correspond to one predetermined field.

Alternatively, the predetermined field may be an LCID field or a field R in a header of the MAC CE, and a value of the LCID field or the field R in the header of the MAC CE may be used to indicate types of all the CSI resource sets indicated in the MAC CE.

In a possible embodiment of the present disclosure, the terminal may further include a third reception module configured to receive configuration information about a plurality of CSI resource sets transmitted by the network side through high-layer signaling. The configuration information may include serial numbers of the CSI resource sets, and the plurality of CSI resource sets may include a first type of CSI resource sets and a second type of CSI resource sets. The MAC CE may carry a serial number of a CSI resource set to be activated/deactivated. The determination module is further configured to: acquire the serial numbers of the CSI resource sets indicated in the MAC CE, a corresponding mapping being provided between the serial numbers of the CSI resource sets indicated in the MAC CE and the serial numbers of the CSI resource sets indicated through the high-layer signaling; and determine the types of the CSI resource sets indicated in the MAC CE in accordance with the mapping between the serial numbers of the CSI resource sets indicated in the MAC CE and the serial numbers of the CSI resource sets indicated through the high-layer signaling.

The mapping may be predefined in a protocol or configured by the network side.

Each CSI resource may be a CSI-RS resource or a CSI-IM resource.

As shown in FIG. 9, the present disclosure further provides in some embodiments a network side device 90, which includes a first transmission module 91 configured to transmit an MAC CE for activating/deactivating CSI resources to a terminal, and the MAC CE is used for the terminal to determine types of CSI resource sets indicated in the MAC CE upon the receipt of the MAC CE. The types of the CSI resource sets may include a first type for the measurement of a semi-persistent PUCCH and a second type for the measurement of a semi-persistent PUSCH.

In a possible embodiment of the present disclosure, the network side device may further include a second transmission module configured to transmit configuration information about a plurality of CSI resource sets to the terminal through high-layer signaling. The configuration information may include serial numbers of the CSI resource sets. The plurality of CSI resource sets may include a first type of CSI resource sets and a second type of CSI resource sets. In the serial numbers of the CSI resource sets, the CSI resource sets including different CSI resources may have different serial numbers. The MAC CE may carry a serial number of a CSI resource set to be activated/deactivated, and the CSI resource sets indicated in the MAC CE may use a same numbering method as the CSI resource sets indicated through the high-layer signaling.

In some other embodiments of the present disclosure, the MAC CE may include a predetermined field, and a value of the predetermined field may be used to indicate a type of at least one CSI resource set indicated in the MAC CE.

In a possible embodiment of the present disclosure, the predetermined field may be a field R in contents in the MAC CE, an activated/deactivated state of at least one CSI resource set may be indicated in the contents in the MAC CE, and each CSI resource set may correspond to one predetermined field.

Alternatively, the predetermined field may be an LCID field or a field R in a header of the MAC CE, and a value of the LCID field or the field R in the header of the MAC CE may be used to indicate types of all the CSI resource sets indicated in the MAC CE.

In a possible embodiment of the present disclosure, the network side device may further include a third transmission module configured to transmit configuration information about a plurality of CSI resource sets to the terminal through high-layer signaling. The configuration information may include serial numbers of the CSI resource sets. The plurality of CSI resource sets may include a first type of CSI resource sets and a second type of CSI resource sets. The MAC CE may carry a serial number of a CSI resource set to be activated/deactivated, and there exists a corresponding mapping between the serial numbers of the CSI resource sets indicated in the MAC CE and the serial numbers of the CSI resource sets indicated through the high-layer signaling.

The mapping may be predefined in a protocol or configured by the network side device.

Each CSI resource may be a CSI-RS resource or a CSI-IM resource.

The present disclosure further provides in some embodiments a terminal, which includes a processor, a memory, and a computer program stored in the memory and executed by the processor. The processor is configured to execute the computer program so as to implement the above-mentioned method for determining the CSI resource type.

The present disclosure further provides in some embodiments a network side device, which includes a processor, a memory, and a computer program stored in the memory and executed by the processor. The processor is configured to execute the computer program so as to implement the above-mentioned method for activating/deactivating CSI resources.

The present disclosure further provides in some embodiments a computer-readable storage medium storing therein a computer program. The computer program is executed by a processor so as to implement the above-mentioned method for determining the CSI resource type, or implement the above-mentioned method for activating/deactivating the CSI resources. The computer-readable storage medium may be a read-only memory (Read-Only Memory, ROM), a random access memory (Random Access Memory, RAM), a magnetic disk or an optical disk.

The schemes in the above embodiments of the present disclosure are used to determine whether the CSI resource set indicated in the MAC CE for activating/deactivating the CSI resources is a CSI resource set for the PUCCH or a CSI resource set for the PUSCH.

According to a conclusion on new radio (New Radio, NR) in the related art, a semi-persistent SRS has an activation/deactivation function, which may be achieved through the MAC CE. The MAC CE for activating/deactivating the semi-persistent SRS may indicate an activated/deactivated state of at least one SRS resource set. Reference signal types of QCL-related information about the SRS resource sets may include CSI-RS, SSB and SRS, so there is an urgent need to provide a scheme for determining the reference signal types of the QCL-related information about the SRS resource sets. QCL may be used to represent a spatial relationship.

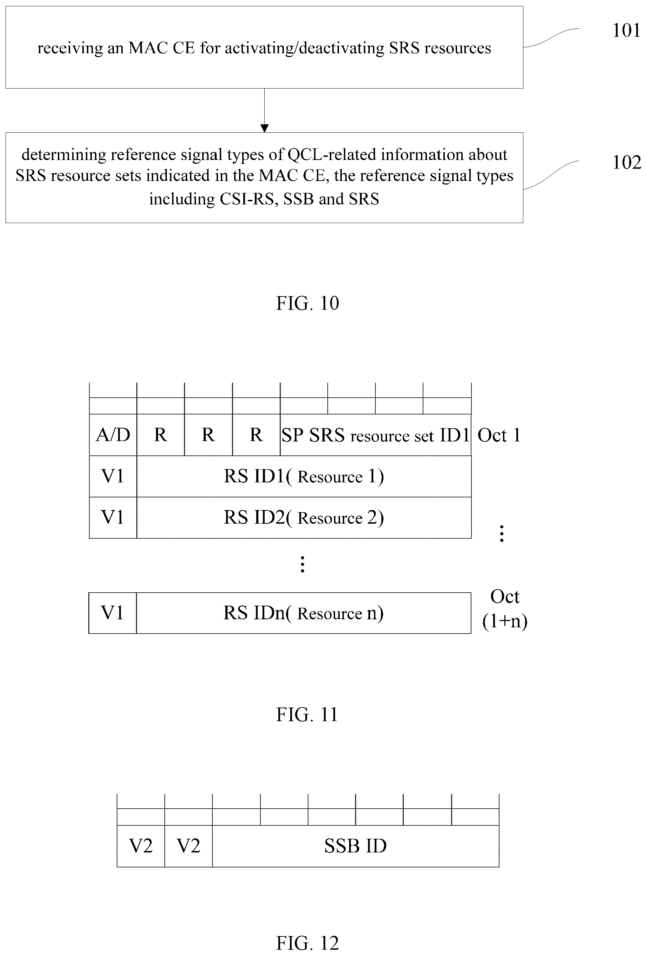

As shown in FIG. 10, the present disclosure further provides in some embodiments a method for determining reference signal types of SRS resources for a terminal, which includes: Step 101 of receiving an MAC CE for activating/deactivating the SRS resources; and Step 102 of determining reference signal types of QCL-related information about SRS resource sets indicated in the MAC CE, the reference signal types including CSI-RS, SSB and SRS.

In the embodiments of the present disclosure, an activated/deactivated state of at least one SRS resource set is indicated in the MAC CE for activating/deactivating (activating or deactivating) the SRS resource sets, and each SRS resource set may include one or more SRS resources.

In the embodiments of the present disclosure, upon the receipt of the MAC CE for activating/deactivating the SRS resource sets, the reference signal types of the QCL-related information about the SRS resource set indicated in the MAC CE may be determined, so as to determine an accurate reference signal for the SRS resource set.

In a possible embodiment of the present disclosure, the determining the reference signal types of the QCL-related information about the SRS resource sets indicated in the MAC CE includes: acquiring a value of a predetermined field in the MAC CE, the value of the predetermined field being used to indicate the reference signal types of the QCL-related information about at least one SRS resource set indicated in the MAC CE; and determining the reference signal types of the QCL-related information about the at least one SRS resource set indicated in the MAC CE in accordance with the value of the predetermined field in the MAC CE.

The predetermined field includes a field V1 in contents in the MAC CE, an activated/deactivated state of at least one SRS resource set may be indicated in the MAC CE, and each SRS resource set may correspond to one field V1. When the field V1 has a first value, it means that the reference signal type of the QCL-related information about a corresponding SRS resource set is CSI-RS, and when the field V1 has a second value, it means that the reference signal type of the QCL-related information about the corresponding SRS resource set is SSB or SRS.

The predetermined field further includes a field V2 in the contents in the MAC CE, and a value of the field V2 may be used to indicate that the reference signal type of the QCL-related information about the corresponding SRS resource set is SSB or SRS.

As shown in FIG. 11, which shows the contents in the MAC CE for activating/deactivating the SRS resources, SP SRS Resource Set ID1 is used to indicate a serial number of an SRS resource set to be activated/deactivated, and RSID is used to indicate a serial number of a reference signal of the QCL-related information about the SRS resource set. Each reference signal corresponds to one field V1. For example, when the value of the field V1 is 1, it means that a corresponding reference signal is CSI-RS, and when the value of the field V1 is 0, it means that the corresponding reference signal is SSB or SRS; or when the value of the field V1 is 0, it means that the corresponding reference signal is CSI-RS, and when the value of the field V1 is 1, it means that the corresponding reference signal is SSB or SRS.

Further, as shown in FIGS. 12 to 14, the contents in the MAC CE for activating/deactivating the SRS resources includes a field V2, and a value of the field V2 is used to indicate that the reference signal type of the QCL-related information about the corresponding SRS resource set is SSB or SRS. For example, when the value of the field V2 is 0, it means that the corresponding reference signal is SSB, and when the value of the field V2 is 1, it means that the corresponding reference signal is SRS; or when the value of the field V2 is 1, it means that the corresponding reference signal is SSB, and when the value of the field V2 is 0, it means that the corresponding reference signal is SRS.

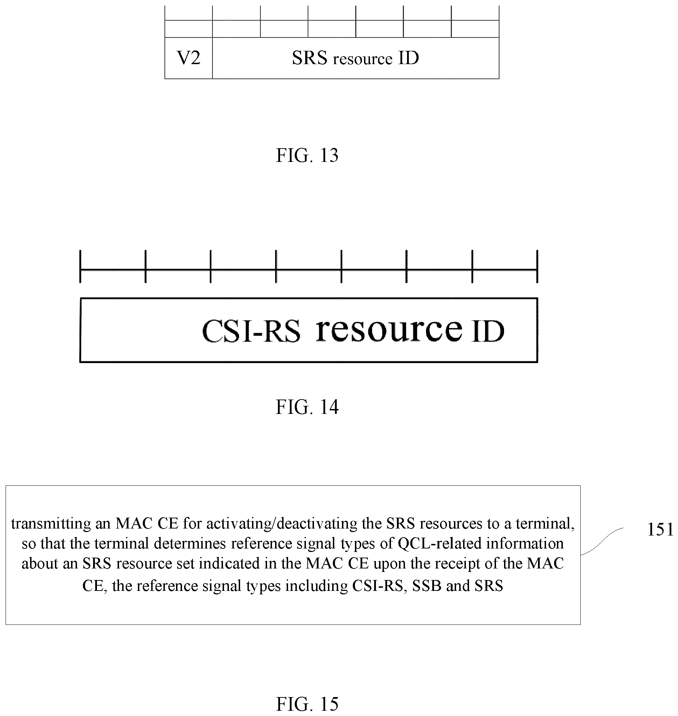

As shown in FIG. 15, the present disclosure further provides in some embodiments a method for activating/deactivating SRS resources for a network side device, which includes Step 151 of transmitting an MAC CE for activating/deactivating the SRS resources to a terminal, and the MAC CE is used for the terminal to determine reference signal types of QCL-related information about an SRS resource set indicated in the MAC CE upon the receipt of the MAC CE. The reference signal types may include CSI-RS, SSB and SRS.

The MAC CE includes a predetermined field, and a value of the predetermined field is used to indicate the reference signal type of the QCL-related information about at least one SRS resource set indicated in the MAC CE.

The predetermined field includes a a field V1 in contents in the MAC CE, an activated/deactivated state of at least one SRS resource set may be indicated in the MAC CE, and each SRS resource set may correspond to one field V1. When the field V1 has a first value, it means that the reference signal type of the QCL-related information about a corresponding SRS resource set is CSI-RS, and when the field V1 has a second value, it means that the reference signal type of the QCL-related information about the corresponding SRS resource set is SSB or SRS.

The predetermined field further includes a field V2 in the contents in the MAC CE, and a value of the field V2 may be used to indicate that the reference signal type of the QCL-related information about the corresponding SRS resource set is SSB or SRS.

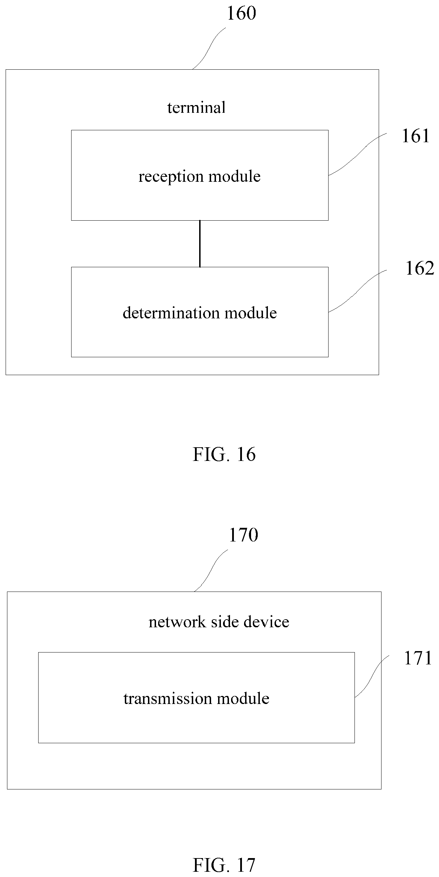

As shown in FIG. 16, the present disclosure further provides in some embodiments a terminal 160, which includes: a reception module 161 configured to receive an MAC CE for activating/deactivating the SRS resources; and a determination module 162 configured to determine reference signal types of QCL-related information about an SRS resource set indicated in the MAC CE, the reference signal types including CSI-RS, SSB and SRS.

In a possible embodiment of the present disclosure, the determination module 162 is further configured to: acquire a value of a predetermined field in the MAC CE, the value of the predetermined field being used to indicate the reference signal types of the QCL-related information about at least one SRS resource set indicated in the MAC CE; and determine the reference signal types of the QCL-related information about the at least one SRS resource set indicated in the MAC CE in accordance with the value of the predetermined field in the MAC CE.

The predetermined field includes a field V1 in contents in the MAC CE, an activated/deactivated state of at least one SRS resource set may be indicated in the MAC CE, and each SRS resource set may correspond to one field V1. When the field V1 has a first value, it means that the reference signal type of the QCL-related information about a corresponding SRS resource set is CSI-RS, and when the field V1 has a second value, it means that the reference signal type of the QCL-related information about the corresponding SRS resource set is SSB or SRS.

The predetermined field further includes a field V2 in the contents in the MAC CE, and a value of the field V2 may be used to indicate that the reference signal type of the QCL-related information about the corresponding SRS resource set is SSB or SRS.

As shown in FIG. 17, the present disclosure further provides in some embodiments a network side device 170, which includes a transmission module configured to transmit an MAC CE for activating/deactivating SRS resources to a terminal, and the MAC CE is used for the terminal to determine reference signal types of QCL-related information about an SRS resource set indicated in the MAC CE upon the receipt of the MAC CE. The reference signal types may include CSI-RS, SSB and SRS.

In a possible embodiment of the present disclosure, the MAC CE may include a predetermined field, and a value of the predetermined field may be used to indicate the reference signal type of the QCL-related information about at least one SRS resource set indicated in the MAC CE.

In a possible embodiment of the present disclosure, the predetermined field may include a field V1 in contents in the MAC CE, an activated/deactivated state of at least one SRS resource set may be indicated in the MAC CE, and each SRS resource set may correspond to one field V1. When the field V1 has a first value, it means that the reference signal type of the QCL-related information about a corresponding SRS resource set is CSI-RS, and when the field V1 has a second value, it means that the reference signal type of the QCL-related information about the corresponding SRS resource set is SSB or SRS.

In a possible embodiment of the present disclosure, the predetermined field may further include a field V2 in the contents in the MAC CE, and a value of the field V2 may be used to indicate that the reference signal type of the QCL-related information about the corresponding SRS resource set is SSB or SRS.

The present disclosure further provides in some embodiments a terminal, which includes a processor, a memory, and a computer program stored in the memory and executed by the processor. The processor is configured to execute the computer program so as to implement the above-mentioned method for determining the reference signal types of the SRS resources.

The present disclosure further provides in some embodiments a network side device, which includes a processor, a memory, and a computer program stored in the memory and executed by the processor. The processor is configured to execute the computer program so as to implement the above-mentioned method for activating/deactivating the SRS resources.

The present disclosure further provides in some embodiments a computer-readable storage medium storing therein a computer program. The computer program is executed by a processor so as to implement the above-mentioned method for determining the reference signal types of the SRS resources, or implement the above-mentioned method for activating/deactivating the SRS resources. The computer-readable storage medium may be an ROM, an RAM, a magnetic disk or an optical disk.

The above-mentioned methods and devices may be applied to a 5^{th}-generation (5^{th}-Generation, 5G) system, a long term evolution (Long Term Evolution, LTE) communications system, or any other future communications systems.

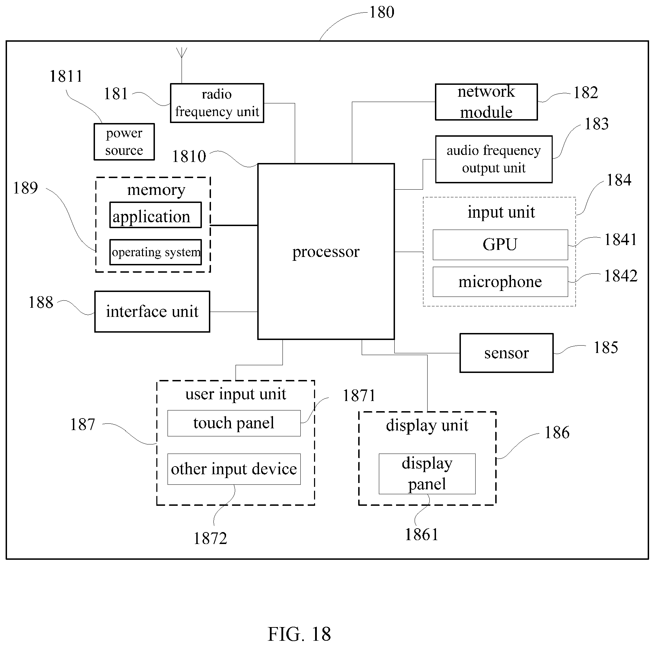

FIG. 18 shows a hardware structure of a mobile terminal according to one embodiment of the present disclosure. The mobile terminal 180 may include, but not limited to, a radio frequency unit 181, a network module 182, an audio frequency output unit 183, an input unit 184, a sensor 185, a display unit 186, a user input unit 187, an interface unit 188, a memory 189, a processor 1810, and a power source 1811. It should be appreciated that, the structure in FIG. 18 shall not be construed as limiting the mobile terminal. The mobile terminal may include more or fewer members, or some members may be combined, or the members may be arranged in different modes. In the embodiments of the present disclosure, the mobile terminal may include, but not limited to, mobile phone, flat-panel computer, laptop computer, personal digital assistant, vehicle-mounted terminal, wearable device or pedometer.

The radio frequency unit 181 is configured to receive an MAC CE for activating/deactivating CSI resource sets, the processor 1810 is configured to determine types of the CSI resource sets indicated in the MAC CE, and the types of the CSI resource sets may include a first type for the measurement of a semi-persistent PUCCH and a second type for the measurement of a semi-persistent PUSCH. Alternatively, the radio frequency unit 181 is configured to receive an MAC CE for activating/deactivating the SRS resources, the processor 1810 is configured to determine reference signal types of QCL-related information about an SRS resource set indicated in the MAC CE, and the reference signal types may include CSI-RS, SSB and SRS.

It should be further appreciated that, in the embodiments of the present disclosure, the radio frequency unit 181 is configured to transmit and receive signals during the information transmission or phone call. To be specific, the radio frequency unit 181 may, upon the receipt of downlink data from a base station, transmit the downlink data to the processor 1810 for subsequent treatment. In addition, the radio frequency unit 181 may transmit uplink data to the base station. Usually, the radio frequency unit 181 may include, but not limited to, an antenna, at least one amplifier, a transceiver, a coupler, a low-noise amplifier and a duplexer. In addition, the radio frequency unit 181 may communicate with a network and the other devices via a wireless communications system.

The network module 182 is configured to enable a user to access the broadband Internet in a wireless manner, e.g., help the user to receive and send an e-mail, browse a web or access a streaming media.

The audio frequency output unit 183 is configured to convert audio data received by the radio frequency unit 181 or the network module 182, or audio data stored in the memory 189, into an audio signal and output the audio signal as a sound. In addition, the audio output unit 183 is further configured to provide an audio output related to a specific function executed by the mobile terminal 180 (e.g., a sound occurring when a calling signal or a message has been received). The audio frequency output unit 183 may include a loudspeaker, a buzzer and a receiver.

The input unit 184 is configured to receive an audio or video signal. It may include a graphics processing unit (Graphics Processing Unit, GPU) 1841 and a microphone 1842. The GPU 1841 is configured to process image data of a static image or video acquired by an image collection unit (e.g., a camera) in a video capturing mode or an image capturing mode, and a processed image frame may be displayed by the display unit 186. The image frame processed by the GPU 1841 may be stored in the memory 189 (or any other storage medium) or transmitted via the radio frequency unit 181 or network module 182. The microphone 1842 is configured to receive a sound, and convert the sound into voice data. In a call mode, the processed audio data may be converted into data in a format capable of being transmitted by the radio frequency unit 181 to a mobile communication base station.

The at least one sensor 185 may include a light sensor, a movement sensor and the other sensors. To be specific, the light sensor may include an ambient light sensor or a proximity sensor. The ambient light sensor is configured to adjust a brightness value of a display panel 1861 in accordance with ambient light. The proximity sensor is configured to turn off the display panel 1861 and/or a backlight source. As one of the movement sensors, an accelerometer may detect acceleration in various directions (usually a three-axis accelerometer), and detect a level and a direction of a gravity force when in a static state. Through the accelerometer, it is able to identify a posture of the electronic device (e.g., perform a switching operation between portrait and landscape orientations, play relevant games, and calibrate a posture of a magnetometer), and perform vibration-related functions (e.g., count steps and strikes). The sensor 185 may further include a fingerprint sensor, a pressure sensor, an iris sensor, a molecule sensor, a gyroscope, a barometer, a hygrometer, a thermometer or an infrared sensor, which will not be particularly defined herein.

The display unit 186 is configured to display information inputted by the user or provided to the user. The display unit 186 may include the display panel 1861, e.g., a Liquid Crystal Display (LCD) panel, or an Organic Light-Emitting Diode (OLED) panel.

The user input unit 187 is configured to receive digital or character information inputted by the user, and generate a key signal input related to user settings and function control of the mobile terminal. To be specific, the user input unit 187 may include a touch panel 1871 and an input device 1872. The touch panel 1871, also called as touch screen, is configured to collect a touch operation made by the user on or in proximity to the touch panel (e.g., an operation made by the user through any appropriate object or attachment (e.g., finger or stylus) on or in the proximity to the touch panel 1871). The touch panel 1871 may include a touch detection unit and a touch controller. The touch detection unit is configured to detect a touch position and a signal generated due to the touch operation, and transmit the signal to the touch controller. The touch controller is configured to receive touch information from the touch detection unit, convert it into coordinates of a touch point, transmit the coordinates to the processor 1810, and receive and execute a command from the processor 1810. In addition, the touch panel 1871 may be of a resistive type, a capacitive type, an infrared type or a surface acoustic wave (SAW) type. The other input device 1872 may include, but not limited to, a physical keyboard, a functional button (e.g., a volume control button or an on/off button), a trackball, a mouse, and a joystick, which will not be particularly defined herein.

Further, the touch panel 1871 may cover the display panel 1861. When the touch operation made on or in proximity to the touch panel 14071 has been detected, the touch panel 1871 may transmit the touch information to the processor 1810, so as to determine a type of a touch event. Then, the processor 1810 may control the display panel 1861 to provide a corresponding visual output in accordance with the type of the touch event. Although the touch panel 1871 and the display panel 1861 are configured as two separate members in FIG. 18, in some embodiments of the present disclosure, they may be integrated so as to achieve the input and output functions of the mobile terminal, which will not be particularly defined herein.

The interface unit 188 is configured to provide an interface between an external device and the mobile terminal 180. For example, the external device may include a wired or wireless headset port, an external power source port (or a charging port), a wired or wireless data port, a memory card port, a port for a device having an identification module, an audio input/output (I/O) port, a video I/O port, and an earphone port. The interface unit 188 is configured to receive an input from the external device (e.g., data information and electricity) and transmit the input to one or more elements of the mobile terminal 180, or transmit data between the mobile terminal 180 and the external device.

The memory 189 is configured to store therein a software application and various data. It may mainly include an application storage area and a data storage area. An operating system and at least one application for the functions (e.g., an audio/image playing function) may be stored in the application storage area. Data created in accordance with the operation of the mobile phone (e.g., audio data and textbook) may be stored in the data storage area. In addition, the memory 189 may include a high-speed random access memory, or a non-volatile memory (e.g., at least one magnetic disk or flash memory), or any other volatile solid state memory.

As a control center of the mobile terminal, the processor 1810 may be connected to the other members of the mobile terminal via various interfaces and circuits, and configured to run or execute the software program and/or module stored in the memory 189, and call the data stored in the memory 189, so as to execute the functions of the mobile terminal and process the data, thereby to monitor the entire mobile terminal. The processor 1810 may include one or more processing units. In a possible embodiment of the present disclosure, an application processor and a modem may be integrated into the processor 1810. The application processor is mainly configured to process the operating system, a user interface and the application. The modem is mainly configured to process wireless communication. It should be appreciated that, the modem may also not be integrated into the processor 1810.

The power source 1811 (e.g., a battery) is configured to supply power to the members of the mobile terminal 180. In a possible embodiment of the present disclosure, the power source 1811 is logically connected to the processor 1810 via a power source management system, so as to achieve such functions as charging, discharging and power consumption management through the power source management system.

In addition, the mobile terminal 180 may include some functional modules not shown in FIG. 18, which will not be particularly defined herein.

The terminal in the embodiments of the present disclosure may be a wireless terminal or a wired terminal. The wireless terminal may be a device capable of providing voice data and/or any other service data to a user, e.g., a handheld device having a wireless connection function, or any other processing device capable of being connected to a wireless modem. The wireless terminal may communicate with one or more core networks via a radio access network (Radio Access Network, RAN). The wireless terminal may be a mobile terminal, e.g., a mobile phone (or cellular phone), or a computer having the mobile terminal, e.g., a portable, pocket-sized, handheld, built-in or vehicle-mounted mobile device, which are capable of exchanging voice and/or data with the RAN. For example, the wireless terminal may be a personal communication service (Personal Communication Service, PCS) telephone, a cordless telephone, a session initiation protocol (Session Initiation Protocol, SIP) phone, a wireless local loop (Wireless Local Loop, WLL) station, or a personal digital assistant (Personal Digital Assistant, PDA). In addition, the wireless terminal may also be called as system, subscriber unit, subscriber station, mobile station, mobile, remote station, remote terminal, access terminal, user terminal, user agent, user device or user equipment, which will not be particularly defined herein.

The network side device in the embodiments of the present disclosure may be a base transceiver station (Base Transceiver Station, BTS) in a global system of mobile communication (Global System of Mobile Communication, GSM) or a code division multiple access (Code Division Multiple Access, CDMA) system, a node B (Node B, NB) in a wideband code division multiple access (Wideband Code Division Multiple Access, WCDMA) system, an evolved node B (Evolved Node B, eNB or eNodeB) in an LTE system, a relay or an access point, or a base station in a 5G network, which will not be particularly defined herein.

It should be appreciated that, such words as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

Through the above-mentioned description, it may be apparent for a person skilled in the art that the present disclosure may be implemented by software as well as a necessary common hardware platform, or by hardware, and the former may be better in most cases. Based on this, the technical solutions of the present disclosure, partial or full, or parts of the technical solutions of the present disclosure contributing to the related art, may appear in the form of software products, which may be stored in a storage medium (e.g., ROM/RAM, magnetic disk or optical disk) and include several instructions so as to enable a terminal device (mobile phone, computer, server, air conditioner or network device) to execute the method in the embodiments of the present disclosure.

## Claims

1. A method for determining reference signal types of sounding reference signal, SRS, resources performed by a terminal (160), the method comprising:
receiving (101) a media access control control element, MAC CE, from a network side device, for activating/deactivating the SRS resources; and
determining (102) reference signal types of quasi-co-location, QCL-related information about SRS resource sets indicated in the MAC CE, the reference signal types comprising channel state information-reference signal, CSI-RS, synchronization signal block, SSB, and SRS,
wherein the determining (102) the reference signal types of the QCL-related information about the SRS resource sets indicated in the MAC CE comprises:
acquiring a value of a predetermined field in the MAC CE, the value of the predetermined field being used to indicate the reference signal types of the QCL-related information about at least one SRS resource set indicated in the MAC CE; and
determining (102) the reference signal types of the QCL-related information about the at least one SRS resource set indicated in the MAC CE in accordance with the value of the predetermined field in the MAC CE,
wherein the predetermined field comprises a field V1 in contents in the MAC CE, an activated/deactivated state of at least one SRS resource set is indicated in the MAC CE, and each SRS resource set corresponds to one field V1,
wherein when the field V1 has a first value, the reference signal type of the QCL-related information about a corresponding SRS resource set is CSI-RS, and when the field V1 has a second value, the reference signal type of the QCL-related information about the corresponding SRS resource set is SSB or SRS,
the method being **characterized in that**,
wherein the predetermined field further comprises a field V2 in the contents in the MAC CE, and a value of the field V2 is used to indicate that the reference signal type of the QCL-related information about the corresponding SRS resource set is SSB or SRS,
the field V1 and the field V2 are each one a one bit field, and
when the value of the field V1 is 1, it means that the corresponding reference signal is CSI-RS, and when the value of the field V1 is 0, it means that the corresponding reference signal is SSB or SRS; or when the value of the field V1 is 0, it means that the corresponding reference signal is CSI-RS, and when the value of the field V1 is 1, it means that the corresponding reference signal is SSB or SRS;
when the value of the field V2 is 0, it means that the corresponding reference signal is SSB, and when the value of the field V2 is 1, it means that the corresponding reference signal is SRS; or when the value of the field V2 is 1, it means that the corresponding reference signal is SSB, and when the value of the field V2 is 0, it means that the corresponding reference signal is SRS.

2. A terminal (160), comprising:
a reception module (161) configured to receive a media access control control element, MAC CE, from a network side device, for activating/deactivating sounding reference signal, SRS, resources; and
a determination module (162) configured to determine reference signal types of quasi-co-location, QCL-related information about SRS resource sets indicated in the MAC CE, the reference signal types comprising channel state information-reference signal, CSI-RS, synchronization signal block, SSB, and SRS,
wherein the determination module (162) is further configured to:
acquire a value of a predetermined field in the MAC CE, the value of the predetermined field being used to indicate the reference signal types of the QCL-related information about at least one SRS resource set indicated in the MAC CE; and
determine the reference signal types of the QCL-related information about the at least one SRS resource set indicated in the MAC CE in accordance with the value of the predetermined field in the MAC CE,
wherein the predetermined field comprises a field V1 in contents in the MAC CE, an activated/deactivated state of at least one SRS resource set is indicated in the MAC CE, and each SRS resource set corresponds to one field V1,
wherein when the field V1 has a first value, the reference signal type of the QCL-related information about a corresponding SRS resource set is CSI-RS, and when the field V1 has a second value, the reference signal type of the QCL-related information about the corresponding SRS resource set is SSB or SRS,
the terminal (160) being **characterized in that**,
wherein the predetermined field further comprises a field V2 in the contents in the MAC CE, and a value of the field V2 is used to indicate that the reference signal type of the QCL-related information about the corresponding SRS resource set is SSB or SRS,
the field V1 and the field V2 are each one a one bit field, and
when the value of the field V1 is 1, it means that the corresponding reference signal is CSI-RS, and when the value of the field V1 is 0, it means that the corresponding reference signal is SSB or SRS; or when the value of the field V1 is 0, it means that the corresponding reference signal is CSI-RS, and when the value of the field V1 is 1, it means that the corresponding reference signal is SSB or SRS;
when the value of the field V2 is 0, it means that the corresponding reference signal is SSB, and when the value of the field V2 is 1, it means that the corresponding reference signal is SRS; or when the value of the field V2 is 1, it means that the corresponding reference signal is SSB, and when the value of the field V2 is 0, it means that the corresponding reference signal is SRS.

## Patentansprüche

1. Verfahren zum Bestimmen von Referenzsignaltypen von SRS-Ressourcen (Sounding Reference Signal), das von einem Endgerät (160) durchgeführt wird, wobei das Verfahren umfasst:
Empfangen (101) eines Medienzugriffssteuerungselements, MAC CE, von einem netzseitigen Gerät zum Aktivieren/Deaktivieren der SRS-Ressourcen; und
Bestimmung (102) von Referenzsignaltypen von Quasi-Co-Location, QCL-bezogenen Informationen über SRS-Ressourcensätze, die im MAC CE angegeben sind, wobei die Referenzsignaltypen Kanalzustandsinformations-Referenzsignal, CSI-RS, Synchronisationssignalblock, SSB und SRS umfassen,
wobei die Bestimmung (102) der Referenzsignaltypen der QCL-bezogenen Informationen über die im MAC CE angegebenen SRS-Ressourcensätze umfasst:
Erfassen eines Wertes eines vorbestimmten Feldes im MAC CE, wobei der Wert des vorbestimmten Feldes verwendet wird, um die Referenzsignaltypen der QCL-bezogenen Informationen über mindestens einen im MAC CE angegebenen SRS-Ressourcensatz anzuzeigen; und
Bestimmung (102) der Referenzsignaltypen der QCL-bezogenen Informationen über den mindestens einen SRS-Ressourcensatz, der in dem MAC CE angegeben ist, in Übereinstimmung mit dem Wert des vorbestimmten Feldes in dem MAC CE,
wobei das vorbestimmte Feld ein Feld V1 im Inhalt des MAC CE umfasst, ein aktivierter/deaktivierter Zustand von mindestens einem SRS-Ressourcensatz im MAC CE angezeigt wird und jeder SRS-Ressourcensatz einem Feld V1 entspricht,
wobei, wenn das Feld V1 einen ersten Wert hat, der Referenzsignaltyp der QCL-bezogenen Information über einen entsprechenden SRS-Ressourcensatz CSI-RS ist, und wenn das Feld V1 einen zweiten Wert hat, der Referenzsignaltyp der QCL-bezogenen Information über den entsprechenden SRS-Ressourcensatz SSB oder SRS ist, wobei das Verfahren **dadurch gekennzeichnet ist, dass**,
das vorbestimmte Feld ferner ein Feld V2 in den Inhalten im MAC CE umfasst, und ein Wert des Feldes V2 verwendet wird, um anzuzeigen, dass der Referenzsignaltyp der QCL-bezogenen Informationen über den entsprechenden SRS-Ressourcensatz SSB oder SRS ist,
das Feld V1 und das Feld V2 jeweils Ein-Bit-Felder sind, und
wenn der Wert des Feldes V1 1 ist, bedeutet dies, dass das entsprechende Referenzsignal CSI-RS ist, und wenn der Wert des Feldes V1 0 ist, bedeutet dies, dass das entsprechende Referenzsignal SSB oder SRS ist; oder wenn der Wert des Feldes V1 0 ist, bedeutet dies, dass das entsprechende Referenzsignal CSI-RS ist, und wenn der Wert des Feldes V1 1 ist, bedeutet dies, dass das entsprechende Referenzsignal SSB oder SRS ist;
wenn der Wert des Feldes V2 0 ist, bedeutet dies, dass das entsprechende Referenzsignal SSB ist, und wenn der Wert des Feldes V2 1 ist, bedeutet dies, dass das entsprechende Referenzsignal SRS ist; oder wenn der Wert des Feldes V2 1 ist, bedeutet dies, dass das entsprechende Referenzsignal SSB ist, und wenn der Wert des Feldes V2 0 ist, bedeutet dies, dass das entsprechende Referenzsignal SRS ist.

2. Endgerät (160), umfassend:
ein Empfangsmodul (161), das so konfiguriert ist, dass es ein Medienzugriffs-Steuerelement (MAC CE) von einer netzseitigen Vorrichtung empfängt, um die Ressourcen des akustischen Referenzsignals (SRS) zu aktivieren/deaktivieren; und
ein Bestimmungsmodul (162), das so konfiguriert ist, dass es Referenzsignaltypen von Quasi-Co-Location-, QCL-bezogenen Informationen über SRS-Ressourcensätze bestimmt, die im MAC CE angegeben sind, wobei die Referenzsignaltypen Kanalzustandsinformations-Referenzsignal, CSI-RS, Synchronisationssignalblock, SSB und SRS umfassen, wobei das Bestimmungsmodul (162) ferner zu Folgendem konfiguriert ist:
Erfassen eines Wertes eines vorbestimmten Feldes im MAC CE, wobei der Wert des vorbestimmten Feldes verwendet wird, um die Referenzsignaltypen der QCL-bezogenen Informationen über mindestens einen im MAC CE angegebenen SRS-Ressourcensatz anzuzeigen; und
Bestimmung der Referenzsignaltypen der QCL-bezogenen Informationen über die mindestens eine im MAC CE angegebene SRS-Ressourcengruppe in Übereinstimmung mit dem Wert des vorbestimmten Feldes im MAC CE,
wobei das vorbestimmte Feld ein Feld V1 im Inhalt des MAC CE umfasst, ein aktivierter/deaktivierter Zustand von mindestens einem SRS-Ressourcensatz im MAC CE angezeigt wird und jeder SRS-Ressourcensatz einem Feld V1 entspricht,
wobei, wenn das Feld V1 einen ersten Wert hat, der Referenzsignaltyp der QCL-bezogenen Information über einen entsprechenden SRS-Ressourcensatz CSI-RS ist, und wenn das Feld V1 einen zweiten Wert hat, der Referenzsignaltyp der QCL-bezogenen Information über den entsprechenden SRS-Ressourcensatz SSB oder SRS ist, wobei das Endgerät (160) **dadurch gekennzeichnet ist, dass**,
das vorbestimmte Feld ferner ein Feld V2 in den Inhalten im MAC CE umfasst, und ein Wert des Feldes V2 verwendet wird, um anzuzeigen, dass der Referenzsignaltyp der QCL-bezogenen Informationen über den entsprechenden SRS-Ressourcensatz SSB oder SRS ist,
das Feld V1 und das Feld V2 jeweils Ein-Bit-Felder sind, und
wenn der Wert des Feldes V1 1 ist, bedeutet dies, dass das entsprechende Referenzsignal CSI-RS ist, und wenn der Wert des Feldes V1 0 ist, bedeutet dies, dass das entsprechende Referenzsignal SSB oder SRS ist; oder wenn der Wert des Feldes V1 0 ist, bedeutet dies, dass das entsprechende Referenzsignal CSI-RS ist, und wenn der Wert des Feldes V1 1 ist, bedeutet dies, dass das entsprechende Referenzsignal SSB oder SRS ist;
wenn der Wert des Feldes V2 0 ist, bedeutet dies, dass das entsprechende Referenzsignal SSB ist, und wenn der Wert des Feldes V2 1 ist, bedeutet dies, dass das entsprechende Referenzsignal SRS ist; oder wenn der Wert des Feldes V2 1 ist, bedeutet dies, dass das entsprechende Referenzsignal SSB ist, und wenn der Wert des Feldes V2 0 ist, bedeutet dies, dass das entsprechende Referenzsignal SRS ist.

## Revendications

1. Procédé de détermination de types de signaux de référence des ressources de signaux de référence de sondage, SRS, mis en oeuvre par un terminal (160), le procédé comprenant :
la réception (101) d'un élément de contrôle de contrôle d'accès au support, MAC CE, d'un dispositif côté réseau, pour activer/désactiver les ressources SRS ; et
la détermination (102) des types de signaux de référence des informations relatives à la quasi-co-localisation, QCL, concernant des ensembles de ressources SRS indiqués dans le MAC CE, les types de signaux de référence comprenant un signal de référence sur l'information sur l'état du canal, CSI-RS, un bloc de signaux de synchronisation, SSB, et SRS,
dans lequel la détermination (102) des types de signaux de référence des informations relatives à la QCL concernant les ensembles de ressources SRS indiqués dans MAC CE comprend :
l'acquisition d'une valeur d'un champ prédéterminé dans le MAC CE, la valeur du champ prédéterminé étant utilisée pour indiquer les types de signaux de référence des informations relatives à la QCL concernant au moins un ensemble de ressources SRS indiqué dans le MAC CE ; et
la détermination (102) des types de signaux de référence des informations relatives à la QCL concernant l'au moins un ensemble de ressources SRS indiqué dans le MAC CE en fonction de la valeur du champ prédéterminé dans le MAC CE,
dans lequel le champ prédéterminé comprend un champ V1 dans le contenu du MAC CE, un état activé/désactivé d'au moins un ensemble de ressources SRS est indiqué dans le MAC CE, et chaque ensemble de ressources SRS correspond à un champ V1,
dans lequel, lorsque le champ V1 a une première valeur, le type de signal de référence des informations relatives à la QCL concernant un ensemble de ressources SRS correspondant est CSI-RS, et lorsque le champ V1 a une deuxième valeur, le type de signal de référence des informations relatives à la QCL concernant l'ensemble de ressources SRS correspondant est SSB ou SRS, le procédé étant **caractérisé par le fait que**
dans lequel le champ prédéterminé comprend en outre un champ V2 dans le contenu du MAC CE, et une valeur du champ V2 est utilisée pour indiquer que le type de signal de référence des informations relatives à la QCL concernant l'ensemble de ressources SRS correspondant est SSB ou SRS,
le champ V1 et le champ V2 sont chacun un champ d'un bit, et
lorsque la valeur du champ V1 est 1, cela signifie que le signal de référence correspondant est CSI-RS, et lorsque la valeur du champ V1 est 0, cela signifie que le signal de référence correspondant est SSB ou SRS ; ou lorsque la valeur du champ V1 est 0, cela signifie que le signal de référence correspondant est CSI-RS, et lorsque la valeur du champ V1 est 1, cela signifie que le signal de référence correspondant est SSB ou SRS ;
lorsque la valeur du champ V2 est 0, cela signifie que le signal de référence correspondant est SSB, et lorsque la valeur du champ V2 est 1, cela signifie que le signal de référence correspondant est SRS ; ou lorsque la valeur du champ V2 est 1, cela signifie que le signal de référence correspondant est SSB, et lorsque la valeur du champ V2 est 0, cela signifie que le signal de référence correspondant est SRS.

2. Terminal (160), comprenant :
un module de réception (161) configuré pour recevoir un élément de contrôle de contrôle d'accès au support, MAC CE, d'un dispositif côté réseau, pour activer/désactiver des ressources de signal de référence de sondage, SRS ; et
un module de détermination (162) configuré pour déterminer les types de signaux de référence des informations relatives à la quasi-co-localisation, QCL, concernant les ensembles de ressources SRS indiqués dans le MAC CE, les types de signaux de référence comprenant un signal de référence des informations sur l'état du canal, CSI-RS, un bloc de signaux de synchronisation, SSB, et SRS, dans lequel le module de détermination (162) est en outre configuré pour :
acquérir une valeur d'un champ prédéterminé dans le MAC CE, la valeur du champ prédéterminé étant utilisée pour indiquer les types de signaux de référence des informations relatives à la QCL concernant au moins un ensemble de ressources SRS indiqué dans le MAC CE ; et
déterminer les types de signaux de référence des informations relatives à la QCL concernant l'au moins un ensemble de ressources SRS indiqué dans le MAC CE en fonction de la valeur du champ prédéterminé dans le MAC CE,
dans lequel le champ prédéterminé comprend un champ V1 dans le contenu du MAC CE, un état activé/désactivé d'au moins un ensemble de ressources SRS est indiqué dans le MAC CE, et chaque ensemble de ressources SRS correspond à un champ V1,
dans lequel, lorsque le champ V1 a une première valeur, le type de signal de référence des informations relatives à la QCL concernant un ensemble de ressources SRS correspondant est CSI-RS, et lorsque le champ V1 a une deuxième valeur, le type de signal de référence des informations relatives à la QCL concernant l'ensemble de ressources SRS correspondant est SSB ou SRS, le terminal (160) étant **caractérisé en ce que**
dans lequel le champ prédéterminé comprend en outre un champ V2 dans le contenu du MAC CE, et une valeur du champ V2 est utilisée pour indiquer que le type de signal de référence des informations relatives à la QCL concernant l'ensemble de ressources SRS correspondant est SSB ou SRS,
le champ V1 et le champ V2 sont chacun un champ d'un bit, et
lorsque la valeur du champ V1 est 1, cela signifie que le signal de référence correspondant est CSI-RS, et lorsque la valeur du champ V1 est 0, cela signifie que le signal de référence correspondant est SSB ou SRS ; ou lorsque la valeur du champ V1 est 0, cela signifie que le signal de référence correspondant est CSI-RS, et lorsque la valeur du champ V1 est 1, cela signifie que le signal de référence correspondant est SSB ou SRS ;
lorsque la valeur du champ V2 est 0, cela signifie que le signal de référence correspondant est SSB, et lorsque la valeur du champ V2 est 1, cela signifie que le signal de référence correspondant est SRS ; ou lorsque la valeur du champ V2 est 1, cela signifie que le signal de référence correspondant est SSB, et lorsque la valeur du champ V2 est 0, cela signifie que le signal de référence correspondant est SRS.
